# EUROPEAN PATENT SPECIFICATION

(11) **EP 0 591 983 B1**
(45) Date of publication and mention of the grant of the patent: **29.03.2006**
(21) Application number: 93116318.2
(22) Date of filing: 08.10.1993
(51) Int. Cl.: B29C 45/76, B29C 45/40

(54) **Injection molding machine, and method for controlling ejection therein**
Spritzgiessmaschine und Verfahren zur Auswerfsteuerung
Machine à mouler par injection et procédé pour contrôler l'éjection

(30) Priority: 09.10.1992 JP 27186392; 04.12.1992 JP 32529192
(43) Date of publication of application: 13.04.1994
(73) Proprietor: SUMITOMO HEAVY INDUSTRIES, LTD, Tokyo 100 (JP)
(72) Inventor: Fujishiro, Atsushi, Chiba-shi, Chiba 263 (JP); Ishii, Yukio, Sakura-shi, Chiba 285 (JP); Hara, Hitoshi, Funabashi-shi, Chiba 274 (JP)
(74) Representative: Boeters, Hans Dietrich

(56) References cited:
- PATENT ABSTRACTS OF JAPAN vol. 12, no. 45 (M-667)(2892) 10 February 1988 & JP-A-62 197 261 (TOYO KIKAI KINZOKU)
- PATENT ABSTRACTS OF JAPAN vol. 14, no. 23 (M-920)(3966) 17 January 1990 & JP-A-01 263 018 (MITSUBISHI HEAVY IND. LTD.)
- PATENT ABSTRACTS OF JAPAN vol. 10, no. 118 (M-475)(2175) 2 May 1986 & JP-A-60 247 533 (TOSHIBA KIKAI)
- PATENT ABSTRACTS OF JAPAN vol. 11, no. 321 (M-633)(2768) 20 October 1987 & JP-A-62 104 723 (MEIKI CO. LTD.)
- PATENT ABSTRACTS OF JAPAN vol. 11, no. 196 (M-601)(2643) 24 June 1987 & JP-A-62 019 422 (MATSUSHITA ELECTRIC WORKS)

## Description

The present invention relates to a method of controlling movement of at least one ejector pin in an injection molding machine according to the pre-characterizing portion of claim 1 and to a corresponding injection molding machine.

In general an injection molding machine is designed so that a resin heated and melted in a heating cylinder is injected from an injection nozzle of an injecting device charging into a mold cavity defined between two or more dies and then cooled and solidified, whereupon the mold is opened to remove the molded product. The opening of the mold is effected upon completion of the cooling step and the molded product is ejected downwardly from one, generally a movable one, of the dies by an ejector device. The respective ejector device includes at least one ejector pin disposed with its tip to face the mold cavity and with its trailing or rear end fixed to an ejector plate, and an ejecting cylinder is connected to the rear side of the ejector plate through an ejector rod. Thus, when the ejecting cylinder is operated to advance the ejector plate, the ejector pin ejects the molded product.

However, since at the beginning of an ejection operation the molded product tends to adhere to the respective die, a fast advancement of the ejector pin would cause digging into the molded product whereas the product itself would be considerably deformed. Once the product gets free from the die, the inherent deformation restoring force could cause overstretching of the product in the opposite direction, thereby producing scattering or cracking.

Therefore the advancing speed of the ejector pin or pins may first be reduced prior to impacting the molded product, whereafter the speed is increased to reduce ejection time (Patent Abstract of Japan JP-A-62 197 261). However, it is difficult to establish an optimum ejector pin position or time for changing the speed and this may result in either a damage of the molded product or in a loss of time in each ejection step.

As far as the molded product might not readily drop at the end of the ejection step, a small vibration may be imparted to the corresponding ejector pin or pins upon generation of a mold opening completion signal (Patent Abstract of Japan JP-A-62 019 422). The vibration is generated by a separate cylinder in combination with vibration springs.

From document JP-A-63 139 109 a method and device for controlling projection of a molded form of an injection molding machine is known, wherein an ejector pin is projected plural times during a unit cycle to release a molten product from adhesing to a trip of said ejector pin.

This in mind, the invention as claimed aims at providing a method of controlling ejection in an injection molding machine and a corresponding injection molding machine in which ejection is reliably effected without the risk of damaging the molded product and/or incomplete ejection and, nevertheless, in a minimum time.

First advancing the ejector pin or pins in a controlled manner and only than employing a minute vibration results in a most careful and nevertheless complete ejection of the molded product in a minimum time. Whereas the advancing movement is for the molded product toseparate from the die, the vibration is for the molded product to become free from the ejector pin or pins after these have - at least forcefully - become effective.

In the following, the present invention is described by way of example in connection with the accompanying drawings, wherein
- Fig. 1: is a diagram illustrating the ejection state of a molded product with a prior art ejector device,
- Fig. 2: is a partial sectional view of an injection molding machine according to the present invention,
- Fig. 3: is a graph illustrating the relationship between the ejector pin position and the required ejection pressure in an injection molding machine of the present invention,
- Fig. 4: is a graph illustrating the relationship between the ejector pin position and the time in the same injection molding machine,
- Fig. 5: is a time chart with respect to the ejection speed and the ejection pressure of an ejector pin in the same injection molding machine,
- Fig. 6: is a sectional view of an injection molding machine similar to that one of Fig. 2, yet showing a specific example of a driving device employed therein, and
- Fig. 7: which is no part of the present invention is a graph illustrating the relationship between the ejector pin position and the time in this latter injection molding machine.

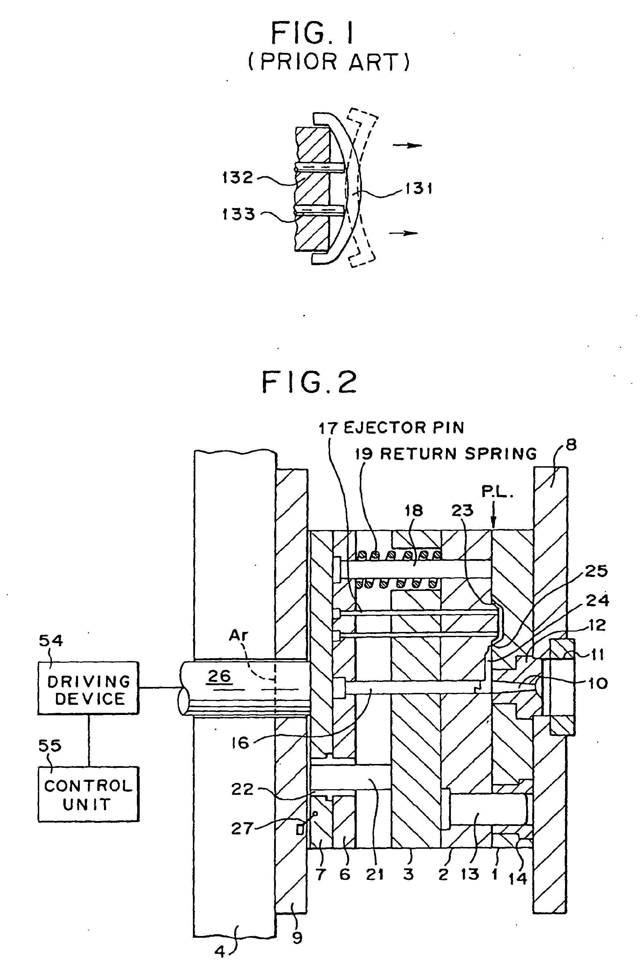

Fig. 1 shows the ejection state of a molded product 131 in the respective prior art ejector device. 132 is a movable die and 133 are ejector pins. When the molded product 131 is being ejected by the ejector pins 133 it is at first deformed into an arched shape, as shown by a solid line in Fig. 1, before it gets separated from the movable die 132. After having got separated from the movable die 132 the molded product 131 gets restored from its deformation, swinging into the opposite direction, as shown by a dashed line. By this effect the molded product 131 may be scattered, cracked or the like.

In Fig. 2, as mentioned before, an injection molding machine according to the present invention is shown in sectional view. This injection molding machine comprises a stationary die 1, a movable die 2 disposed in an opposed relation to the stationary die 1 for movement into and out of contact with the stationary die 1, so as to define a cavity 23 between both the dies, when in contact with the stationary die 1, the movable die 2 being reinforced by a receiving plate 3, a movable platen 4, an upper ejector plate 6, a lower ejector plate 7, a stationary mounting plate 8 for mounting the stationary die 1 to a stationary plate (which is not shown), and a movable mounting plate 9 for mounting the movable die 2 to the movable platen 4.

The injection molding machine further includes a sprue 10, a locating ring 11 for facilitating the mounting of the stationary die 1 to the stationary platen and for permitting a smooth nozzle touching, a sprue bush 12 for guiding a resin injected from an injecting nozzle which is not shown, a guide pin 13 mounted to the movable die 2 for guiding the stationary die 1, a guide bush 14, a sprue lock pin 16 disposed with its tip end facing the sprue 10 to extend through the movable die 2, an ejector pin 17 disposed with its tip end facing the cavity 23 to extend through the movable die 2, a return pin 18, and a return spring 19 disposed to enclose the return pin 18 for biasing the upper ejector plate 6 rearwardly.

Each of the sprue lock pin 16, the ejector pin 17 and the return pin 18 has, at its rear or trailing end, a flange portion which is clamped by the upper and lower ejector plates 6 and 7.

Further, the injection molding machine includes an ejector guide pin 21 functioning to permit a smooth ejection by the ejector pin 17, an ejector guide pin bush 22, a runner 24, and a gate 25. Reference character P.L. in Fig. 2 designates a parting line between the stationary and movable dies 1 and 2.

In the injection molding machine having the above-described construction, when the resin is injected in a condition in which the injecting nozzle is in abutment against the sprue bush 12, it is passed through the sprue 10, the runner 24 and the gate 25 into the cavity 23.

Upon the completion of an injection step, a pressure maintaining step is conducted for replenishing the resin into the cavity 23 with shrinkage of the resin within the cavity 23. Then, the resin is cooled to provide a molded product which is not shown. Thereupon, the movable die 2 is retreated leftwardly as viewed in Fig.2 away from the stationary die 1, thus effecting the opening of the dies.

At this time, the ejector pin 17 is advanced rightwardly as viewed in Fig.2, thereby causing the molded product to be ejected down from the movable die 2. For this purpose, an ejector rod 26 is disposed at a rear end of the lower ejector plate 7 and driven by a driving device 54 for advancing and retreating movement into and out of contact therewith.

The driving device 54 comprises, for example, an ejector cylinder. Reference numeral 55 is a control unit for controlling the driving device 54, and reference character Ar is a retreat limit position for the ejector rod 26.

A retreat-certifying switch 27 is disposed between the lower ejector plate 7 and the movable mounting plate 9 to detect the completion of the retreating movement of the ejector plates 6 and 7. Usually, the injection molding machine is operated in an automatic mode, a semi-automatic mode or a manual mode. When the operational mode of the machine has been switched-over from the automatic mode or the semi-automatic mode to the manual mode, or when the ejector pin 17 has been retreated to its ejection starting position, the retreat-certifying switch 27 is turned OFF.

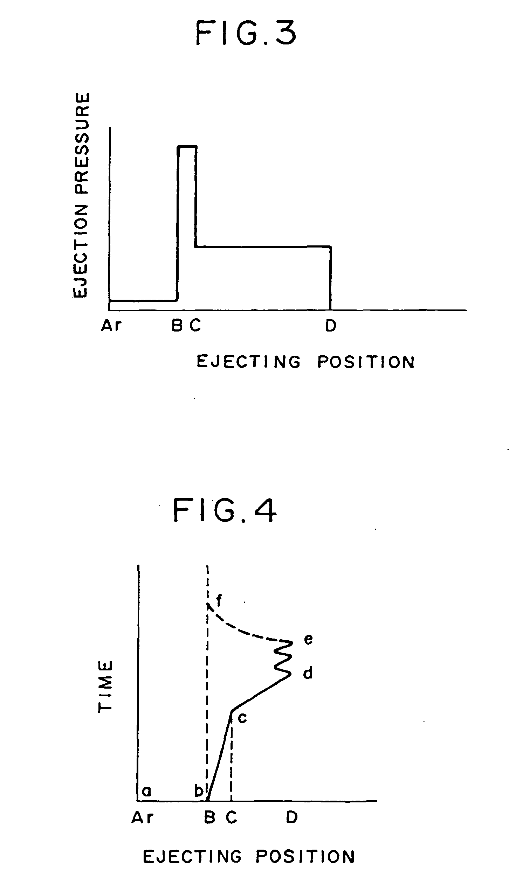

In the first embodiment, the relationship between the ejecting position and the ejecting pressure is established as shown in Fig. 3.

In Fig.3, Ar indicates the retreat limit position for the ejector rod 26; B indicates an ejection starting position occupied by the ejector pin 17 when the ejector plates 6 and 7 have been retreated by the action of the return spring 19; C indicates a release position in which a molded product (not shown) is released from the movable die 2; and D indicates an advance limit position, i.e., a maximum ejection position for the ejector pin 17, which is a dropping position for the molded product.

In the first embodiment, the relationship between the ejecting position and the time is established as shown in Fig. 4.

In Fig.4, Ar indicates the retreat limit position for the ejector rod 26 (see Fig.2); B indicates the ejection starting position for the ejector pin 17; C indicates the release position for the molded product (not shown); and D indicates the dropping position for the molded product.

In addition, in Fig. 4, a indicates an operation starting point, wherein the ejector rod 26 is in its retreat limit position Ar; b indicates an ejection starting point, wherein the ejector pin 17 is in its ejection starting position B; c indicates a release point at which the release of the molded product from the movable die 2 is started, wherein a sticking between the molded product and the movable die 2 is loosened by advancement of the ejector pin 17, thereby providing a released state. At this time, the ejector pin 17 is in the release position C. Then, the ejector pin 17 is pushed at a low speed from the ejection starting position B to the release position C. This prevents the molded product from being scattered by a deformation restoring force, or prevents cracks from being produced in the molded product.

Alternatively, the releasing of the molded product may be started when the ejector pin 17 has reached the release position C, or the releasing of the molded product may be started when the release point c has been detected by a timer which is not shown.

In this embodiment, the control of the ejecting pressure is carried out in correspondence to a load, until the release point c is reached, while the load corresponding to the ejecting pressure is detected by a hydraulic pressure, an electric current or torque, and when the load has been reduced, the release point c is detected.

When the reaching of the release point c has been detected, the control of the ejection pressure is immediately switched over to a control of speed, so that the ejector pin 17 is advanced at a high speed.

Further, in Fig. 4, d indicates a very small vibration starting point at which a very small vibration is started; and e indicates a very small vibration completion point at which the very small vibration is completed. Between the very small vibration starting point and the very small vibration completion point, the ejector pin 17 is in the dropping position D in which the molded product is reliably dropped. At the vibration starting point d, the evry small vibration is started by instantaneously retreating the ejector pin 17 either by operating an ejector device or by a spring force of the return spring 19, and the repeating of the advancing and retreating movements of the ejector pin 17 causes a very small vibration. At this time, the ejector pin 17 biting into the molded product is retreated, while the molded product is intended to be further advanced by an inertia force generated until the molded product has reached the dropping position D, and thus, the molded product is completely released and dropped from the die.

Therefore, there is no time loss in the ejection step, but also an improved efficiency of operation is provided.

In the very small vibration, it is necessary to advance and retreat the ejector pin 17 at a required speed within a very short time, but each of the time and speed for advancing and retreating movements of the ejector pin 17 may be a value enough to permit the release of the bite-in sticking of the ejector pin 17 to the molded product. They substantially need not be changed after being once set, and in a special case, they may be set within a board which is not shown. Usually, an operator sets only the number of repeats of the advancing and retreating movements of the ejector pin 17 on a setting panel surface which is not shown.

When the very small vibration is repeated by a preset number of times (a single very small vibration is performed in a predetermined time such as 0.05 seconds or less, preferably in a range of 0.01 to 0.02 seconds), the ejector pin 17 is retreated from the dropping position D to the ejection starting position B. It is noted herein that f indicates an ejection completion point.

At this time, the ejector pin 17 is retreated from the dropping position D to the ejection starting position B by only the spring force of the return spring 19. Therefore, at the ejection completion point f, a lowered shock sound may be generated by collision of the lower ejector plate 7 against the movable mounting plate 9.

In the present embodiment, the controls of the ejection pressure and the speed are carried out according to a computer program of the control unit 55, but the ejector rod 26 may be operated manually, and in this case, the ejector rod 26 can be retreated to the retreat limit position Ar. This ensures that the ejector rod 26 and the movable mounting plate 9 can be prevented from being damaged due to the interference with each other, when the movable die 2 is mounted to the movable mounting plate 9.

A method for controlling the ejection in the injection molding machine according to the present invention will be described below.

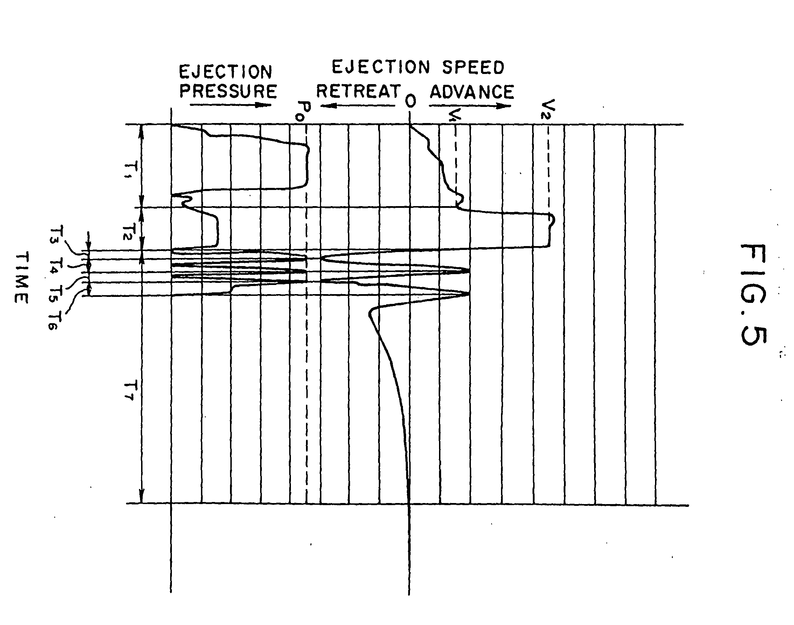

First, in starting the operation of the ejector device, a time T₁ is set by a timer which is not shown, and a preset value P₀ of ejection pressure is set, as shown in Fig. 5. During the time T₁, the ejector pin 17 (Fig.2) is pushed according to the control of the ejection pressure. Therefore, the molded product (which is not shown) can be prevented from being scattered, and cracks can be prevented from being produced in the molded product.

When the ejector pin 17 has reached the release position C (see Fig. 4), the molded product is released from the movable die 2. Thereafter, when the sticking force between the molded product and the movable die is eliminated, the load is reduced, so that the ejection speed V₁ of the ejector pin 17 is rapidly increased. For this reason, an upper limit ejection speed V₂ may be previously set.

Then, during a time T₂, the ejector pin 17 is pushed at the upper limit speed V₂ according to the speed control until it reaches the dropping position D. During this time, the load is reduced.

Subsequently, the very small vibration is started at the dropping position D, so that the advancing and retreating movements of the ejector pin 17 are repeated. It is necessary to advance and retreat the ejector pin 17 at the required speed within the very short time, but each of advancing times T₄ and T₅ and retreating times T₃ and T₅ and advancing and retreating speeds need not be changed, but may be changed within the board (which is not shown) only in a special case.

In the very small vibration in the present embodiment, each of the advancing times T₄ and T₅ was of 0.01 second; each of the retreating times T₃ and T₅ was of 0.02 seconds; each of the advancing and retreating speeds is medium or high; and the number of repeats was two. By setting the times and speeds in this manner, the molded product could be ejected down substantially completely.

When the very small vibration has been completed, the ejector plates 6 and 7 are retreated by the action of the return spring 19, which is attended by the retreating movement of the ejector pin 17.

Upon the completion of the retreating movement of the ejector plates 6 and 7, the retreat-certifying switch 27 is operated. On the other hand, the count-down of a time T₇ is started at a time point at which the time T₂ has been lapsed, and upon the operation of the retreat-certifying switch 27 and upon the counting-up of the time T₇ by the timer, the subsequent die-clamping is started.

In the present embodiment, the timer is used to change-over the individual operations from one to another, and change-over times are set in the timer, but alternatively, a position detector may be used in place of the timer, and change-over positions may be established.

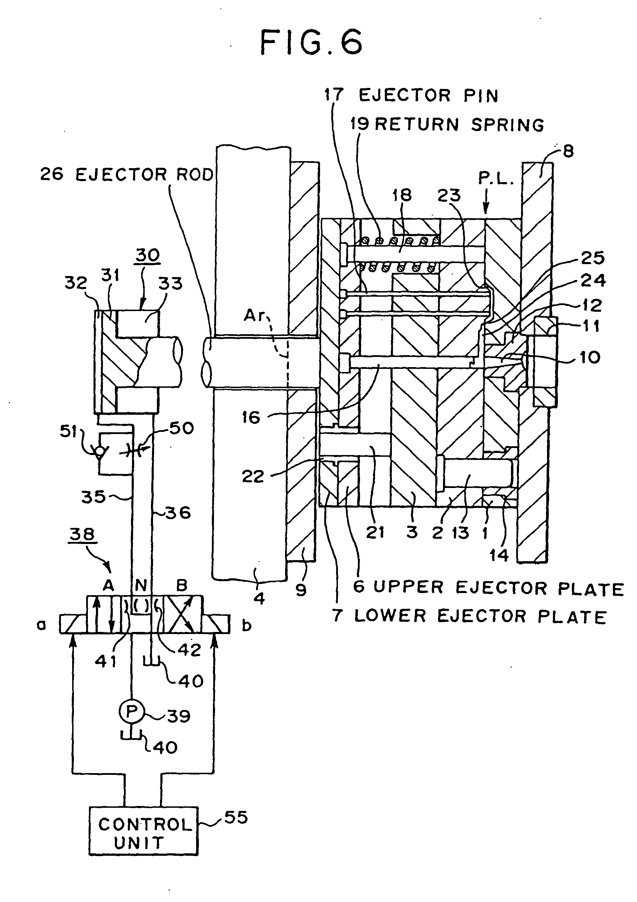

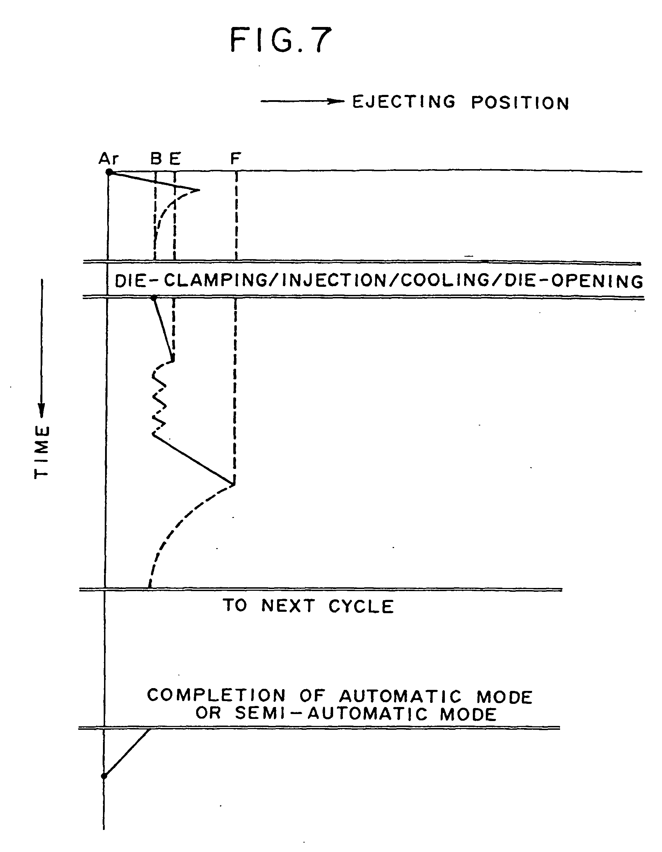

A second embodiment will now be described in connection with Figs. 6 and 7, with Fig. 7 not being in accordance with the present invention.

Referring to Fig.6, an injection molding machine of the second embodiment comprises a stationary die 1, a movable die 2 disposed in an opposed relation to the stationary die 1 for movement into and out of contact with the stationary die 1, so as to define a cavity 23 between both the dies, when in contact with the stationary die 1, the movable die 2 being reinforced by a receiving plate 3, a movable platen 4, an upper ejector plate 6, a lower ejector plate 7, a stationary mounting plate 8 for mounting the stationary die 1 to a stationary plate (which is not shown), and a movable mounting plate 9 for mounting the movable die 2 to the movable platen 4.

Further, the injection molding machine includes a sprue 10, a locating ring 11 for facilitating the mounting of the stationary die 1 to the stationary platen and for permitting a smooth nozzle touching, a sprue bush 12 for guiding a resin injected from an injecting nozzle which is not shown, a guide pin 13 mounted to the movable die 2 for guiding the stationary die 1, a guide bush 14, a sprue lock pin 16 disposed with its tip end facing the sprue 10 to extend through the movable die 2, an ejector pin 17 disposed with its tip end facing the cavity 23 to extend through the movable die 2, a return pin 18, and a return spring 19 disposed to enclose the return pin 18 for biasing the upper ejector plate 6 rearwardly.

Each of the sprue lock pin 16, the ejector pin 17 and the return pin 18 has a flange portion at its rear or trailing end, which flange portion is clamped by the upper and lower ejector plates 6 and 7.

The injection molding machine further includes an ejector guide pin 21 functioning to permit a smooth ejection by the ejector pin 17, an ejector guide pin bush 22, a runner 24, and a gate 25. Reference character P.L. in Fig.2 designates a parting line between the stationary and movable dies 1 and 2.

In the injection molding machine having the above-described construction, when the resin is injected in a condition in which the injecting nozzle is in abutment against the sprue bush 12, it is passed through the sprue 10, the runner 24 and the gate 25 into the cavity 23.

Upon the completion of an injection step, a pressure maintaining step is conducted for replenishing the resin into the cavity 23 with shrinkage of the resin within the cavity 23. Then, the resin is cooled to provide a molded product which is not shown. Thereupon, the movable die 2 is retreated leftwardly as viewed in Fig.2 away from the stationary die 1, thus effecting the opening of the dies.

At this time, the ejector pin 17 is advanced rightwardly as viewed in Fig. 2, thereby causing the molded product to be ejected down from the movable die 2. For this purpose, an ejector rod 26 is disposed at a rear end of the lower ejector plate 7 and driven for advancing and retreating movement into and out of contact therewith by an ejecting cylinder 30 functioning as a driving device. Reference character Ar is a retreat limit position for the ejector rod 26.

A piston 31 is slidably disposed in the ejecting cylinder 30 to define a first oil chamber 32 and a second oil chamber 33. The first and second oil chambers 32 and 33 are connected to a hydraulic valve 38 through oil passages 35 and 36, respectively. Reference numeral 39 designates an oil pump for supplying an oil into the first and second oil chambers 32 and 33, and reference numeral 40 denotes an oil tank.

The hydraulic valve 38 is operated by solenoids a and b, so that it assumes a position A, when the solenoid a is turned ON, thereby permitting an oil discharged by the oil pump 39 to be supplied through the oil passage 35 into the first oil chamber 32, while permitting the oil in the second oil chamber 33 to be drained through the oil passage 35 into the oil tank 40. At this time, the ejector rod 26 is retreated.

Further, the hydraulic valve 38 assumes a position N, when the solenoids a and b are turned OFF, thereby permitting the oil in the first and second oil chambers 32 and 33 to be drained through the oil passages 35 and 36 into the oil tank 40. The hydraulic valve 38 includes constrictions 41 and 42, through which the oil is drained into the oil tank 40.

The solenoids a and b are connected to and turned ON and OFF by a control unit 55. Reference numeral 50 is a variable constriction, and reference numeral 51 is a check valve.

The operation of the injection molding machine having the above-described construction will be described below in connection with a combination of Figs. 6 and 7.

Usually, the injection molding machine is operated in an automatic mode, a semi-automatic mode or a manual mode, but when the automatic mode or the semi-automatic mode is selected, the ejector rod 26 is advanced at a preset speed for a preset time from the retreat limit position Ar before a first ejection is conducted.

Thereafter, the solenoids a and b of the hydraulic valve 38 are turned OFF. At this time, the ejector rod 26 is retreated by the spring force of the return spring 19, and the oil in the first and second oil chambers 32 and 33 in the ejecting cylinder 30 is drained through the oil passages 35 and 36 and the constrictions 41 and 42 respectively into the oil tank 40.

In this case, the oil flows through the constrictions 41 and 42, so that a resisting force opposing the spring force of the return spring 19 is generated. Therefore, the speed at which the lower ejector plate 7 is retreated is lowered and hence, the shock generated upon the collision of the lower ejector plate 7 against the movable mounting plate 9 is reduced, and the shock sound is also reduced on the order of 10 dB.

In addition, at this time, with the completion of the retreating movement of the lower ejector plate 7 upon the collision thereof against the movable mounting plate 9, the ejector rod 26 is stopped at the ejection starting position B and hence, the first ejection is conducted from the ejection starting position B. Therefore, in conducting the ejection again, the ejector rod 26 cannot be idle-travelled from the retreat limit position Ar to the ejection starting position B.

Then, the movable platen 4 is advanced to provide a die-clamping, and the resin is injected and charged into the cavity 23, and then cooled, following which the die-opening is conducted.

Then, the ejector rod 26 is advanced at a low speed provided according to the speed control for a preset time or until it reaches a previously established position E (or until an electric motor is driven by a preset pulse number, when the electric motor is used in place of the ejecting cylinder 30). In this case, when a material of the molded product is a hard resin, only the speed control is carried out, or when the material is a soft resin such as an elastomer, the ejector rod 26 is advanced with a low pressure provided by the control of the ejection pressure. Therefore, the ejector pin cannot excessively bite into the molded product.

Then, the very small vibration is started. More specifically, the ejector pin 17 is advanced at a medium or high speed for a very short time less than 0.1 second and retreated for a very short time less than 0.1 second, and the advancing and retreating movements are repeated. In the very small vibration of the ejector pin 17 in the present embodiment, the ejector pin 17 is advanced for 0.03 seconds and then retreated for 0.03 seconds, and the advancing and retreating movements are repeated 9 times at maximum. It should be noted that the advancing movement of the ejector pin 17 is caused by a hydraulic pressure in the ejecting cylinder 30, and the retreating movement of the ejector pin is caused by the spring force of the return spring 19. Therefore, there is no time loss with the operation of the ejecting cylinder 30, thereby enabling a shortened cycle time until the molded product is ejected down. At this time, the ejector pin 17 biting into the molded product is retreated, while the molded product is intended to be further advanced by an inertia force and hence, is completely released and dropped from the die.

In the very small vibration, it is necessary to repeat the advancing and retreating movements within a very short time, but each of the time and speed for advancing and retreating movements of the ejector pin 17 may be a value enough to permit the release of the bite-in sticking of the ejector pin 17 to the molded product.

It should be noted that the magnitude of the amplitude of the very small vibration can be changed depending upon the shape, the quality and the like of the molded product.

When the molded product is shallow, it can be reliably ejected down at this stage, and the ejector rod can be immediately retreated, leading to a correspondingly shortened cycle time until the molded product is ejected down. In addition, until the very small vibration is started, the ejector rod 26 is advanced at a low speed, leading to a reduced shock to the molded product and ensuring that the molded product is prevented from being scattered, and/or cracks are prevented from being produced in the molded product.

When the solenoids a and b of the hydraulic valve 38 are then turned OFF, the ejector rod 26 is retreated by the spring force of the return spring 19, and the oil in the first and second oil chambers 32 and 33 in the ejecting cylinder 30 is drained through the oil passages 35 and 36 and the constrictions 41 and 42 respectively into the oil tank 40.

In this case, the oil flows through the constrictions 41 and 42 and hence, the speed at which the lower ejector plate 7 is retreated is lowered and hence, the shock generated upon the collision of the lower ejector plate 7 against the movable mounting plate 9 is reduced, and the shock sound is also reduced on the order of 15 dB. Then, the operation is passed to a next cycle.

When the molded product is deep, it cannot be reliably ejected down only with the very small vibration. Thereupon, the ejector rod 26 is advanced to a position F enough to permit the molded product to be ejected down. In this case, the tip end of the ejector pin 17 is in a location sufficiently spaced apart from the movable die 2 and hence, the molded product is reliably ejected down.

If air is supplied in a jet manner from the above of the molded product, the molded product which is about to be released from the movable die 2 and the runner 24 are completely released and ejected down from the movable die 2. In addition, it is possible to prevent the molded product from being scattered.

Thereafter, if the solenoids a and b of the hydraulic valve 8 are turned OFF, the ejector rod 26 is retreated by the spring force of the return spring 19, and the oil in the first and second oil chambers 32 and 33 in the ejecting cylinder 30 is drained through the oil passages 35 and 36 and via the constrictions 41 and 42 respectively into the oil tank 40. This is followed by a next cycle.

In this case, the oil flows through the constrictions 41 and 42 and hence, a resisting force opposing the spring force of the return spring 19 is generated.

When it is difficult to eject the molded product down by the ejector pin 17, a variable constriction 50 and a check valve may be disposed in parallel to each other, so that the resisting force generated during retreating movement of the ejector rod 26 can be varied by adjusting the variable constriction 50.

If a mode switch which is not shown is turned OFF or the manual mode is selected when the ejection in the automatic mode or the semi-automatic mode has been completed, the ejector rod 26 can be retreated to the retreat limit position Ar for any time and at any speed. This causes the tip end of the ejector rod 26 to be located at an inner position than the end face of the movable platen 4 and hence, both of them cannot be damaged in attaching and detaching the movable die 2 to and from the movable platen 4.

Both or either one of the constrictions 41 and 42 and the variable constriction 50 may be provided. Alternatively, another resisting-force generating means may be provided.

In the present embodiment, the ejecting cylinder 30 is used as the driving device for advancing and retreating the ejector rod 26, but when the electric motor is used in place of the ejecting cylinder 30, the number of revolutions may be controlled in place of the speed, and the number of pulses may be controlled in place of the position. In this case, the resisting force opposing the spring force of the return spring can be controlled by an electric current supplied to the motor, and the speed of the ejector rod 26 can be controlled by the number of pulses.

## Claims

1. A method of controlling movement of at least one ejector pin (17) in an injection molding machine during the ejection step in which a minute vibration is imparted to said ejector pin to assist loosening of the molded product from the ejector pin,
**characterized in**
**that** said ejector pin (17) is at first advanced at a controlled speed under speed control and/or load control for a distance or time where the molded product will have started release from the corresponding die (2*),* in that
said vibration is imparted to the ejector pin (17) only thereafter and in that an ejection pressure generating said minute vibration is made greater than the ejection pressure during which the ejector pin is moved from a release position (C) to a dropping position (D) until the molded product is completely released and dropped from said die (2).

2. The method of claim 1, wherein said distance or, respectively, time can be adjusted.

3. The method of claim 1, wherein said distance or time is determined by sensing reduction of the load effective on said ejector pin (17).

4. The method of any one of the preceding claims, wherein, after termination of the advancement at a controlled speed, either before or after said vibration, the ejector pin (17) is further advanced at an increased speed to complete release of the molded product from the corresponding die (2).

5. The method of any one of the preceding claims, wherein, during retreat of said ejector pin (17), the movement thereof is attenuated by counteraction of a resisting force.

6. An injection molding machine comprising
- a stationary die (1),
- a movable die (2) opposed to said stationary die (1) to define a mold cavity (23) therebetween and movable into and out of contact with said stationary die,
- at least one ejector pin (17) slidably supported within one (2) of said dies (1, 2), a tip end of said ejector pin facing that mold cavity (23),
- a driving device (54; 30 - 51) for driving said ejector pin (17) and
- a control unit (55) for controlling said driving device (54; 30 - 51),
**characterized in that** said control unit (55) is designed for control according to the method of any one of the preceding claims.

7. The injection molding machine of claim 6, wherein said vibration is generated by said driving device (54; 30 - 51).

8. The injection molding machine of claim 6 or 7, wherein the retreat of said ejector pin (17) is performed by spring force.

9. The injection molding machine of claim 8, designed for performing the method of claim 5, wherein said driving device (54; 30 - 51) is hydraulically operated and said resisting force is obtained by at least one restriction (41, 42, 50) in the path of the respective hydraulic liquid.

## Patentansprüche

1. Verfahren zum Steuern der Bewegung mindestens eines Auswerferstifts (17) in einer Spritzgießmaschine während des Auswerfschritts, in dem auf den Auswerferstift eine winzige Schwingung übertragen wird, um die Lösung des Gießerzeugnisses vom Auswerferstift zu unterstützen,
**dadurch gekennzeichnet, daß**
der Auswerferstift (17) zuerst mit einer gesteuerten Geschwindigkeit unter einer Geschwindigkeitssteuerung und/oder Belastungssteuerung für einen Abstand oder eine Zeit vorgeschoben wird, wo das Gießerzeugnis die Abgabe aus der entsprechenden Matrize (2) begonnen haben wird, daß
die Schwingung auf den Auswerferstift (17) nur danach übertragen wird, und daß ein Auswerfdruck, der die winzige Schwingung erzeugt, größer als der Auswerfdruck gemacht wird, während dem der Auswerferstift von einer Abgabeposition (C) zu einer Absetzposition (D) bewegt wird, bis das Gießerzeugnis vollständig aus der Matrize (2) abgegeben und abgesetzt ist.

2. Verfahren nach Anspruch 1, wobei der Abstand bzw. die Zeit eingestellt werden kann.

3. Verfahren nach Anspruch 1, wobei der Abstand oder die Zeit bestimmt wird, indem die Reduzierung der effektiven Belastung auf den Auswerferstift (17) abgetastet wird.

4. Verfahren nach einem der vorhergehenden Ansprüche, wobei nach der Beendigung des Vorschubs mit einer gesteuerten Geschwindigkeit, entweder vor oder nach der Schwingung, der Auswerferstift (17) mit einer erhöhten Geschwindigkeit weiter vorgeschoben wird, um die Abgabe des Gießerzeugnisses aus der entsprechenden Matrize (2) zu vollenden.

5. Verfahren nach einem der vorhergehenden Ansprüche, wobei während des Rückzugs des Auswerferstifts (17) dessen Bewegung durch die Gegenwirkung einer Widerstandskraft abgeschwächt wird.

6. Spritzgießmaschine mit
- einer feststehenden Matrize (1),
- einer beweglichen Matrize (2), die der feststehenden Matrize (1) gegenüberliegt, um einen Formenhohlraum (23) dazwischen zu definieren, und in und aus einem Kontakt mit der feststehenden Matrize beweglich ist,
- mindestens einen Auswerferstift (17), der verschiebbar in einer (2) der Matrizen (1, 2) gehalten wird, wobei ein Spitzenende des Auswerferstifts zum Formenhohlraum (23) weist,
- eine Antriebsvorrichtung (54; 30 - 51) zum Antreiben des Auswerferstifts (17) und
- eine Steuereinheit (55) zur Steuerung der Antriebsvorrichtung (54; 30 - 51),
**dadurch gekennzeichnet, daß** die Steuereinheit (55) zur Steuerung gemäß des Verfahrens nach einem der vorhergehenden Ansprüche bestimmt ist.

7. Spritzgießmaschine nach Anspruch 6, wobei die Schwingung durch die Antriebsvorrichtung (54; 30 - 51) erzeugt wird.

8. Spritzgießmaschine nach Anspruch 6 oder 7, wobei der Rückzug des Auswerferstifts (17) durch eine Federkraft ausgeführt wird.

9. Spritzgießmaschine nach Anspruch 8, die zur Ausführung des Verfahrens nach Anspruch 5 bestimmt ist, wobei die Antriebsvorrichtung (54; 30 - 51) hydraulisch betätigt wird und die Widerstandskraft durch mindestens eine Verengung (41, 42, 50) im Weg der jeweiligen Hydraulikflüssigkeit erhalten wird.

## Revendications

1. Procédé de commande du mouvement d'au moins une broche d'éjection (17) dans une machine de moulage par injection au cours de l'étape d'éjection dans laquelle une vibration infime est imprimée sur ladite broche d'éjection dans le but de faciliter le décrochage du produit moulé par rapport à la broche d'éjection,
**caractérisé en**
**ce que** ladite broche d'éjection (17) est amenée tout d'abord à avancer à une vitesse contrôlée sous un contrôle de vitesse et/ou un contrôle de charge sur une distance ou une durée pendant laquelle le produit moulé aura commencé à se libérer de la matrice correspondante (2), **en ce que**
ladite vibration est imprimé sur la broche d'éjection (17) uniquement à la suite de cela et **en ce que** la pression d'éjection qui produit ladite vibration infime est rendue plus élevée que la pression d'éjection pendant laquelle la broche d'éjection se déplace depuis une position de déblocage (C) vers une position de décrochage (D) jusqu'à ce que le produit moulé soit complètement libéré et décroché par rapport à ladite matrice (2).

2. Procédé selon la revendication 1, dans lequel ladite distance ou, respectivement, ladite durée peuvent être ajustées.

3. Procédé selon la revendication 1, dans lequel ladite distance ou ladite durée sont déterminées en détectant une réduction de la charge efficace sur ladite broche d'éjection (17) .

4. Procédé selon l'une quelconque des revendications précédentes, dans lequel, une fois le déplacement à une vitesse contrôlée accompli, avant ou après ladite vibration, la broche d'éjection (17) avance en outre à une vitesse plus rapide afin de terminer le décrochage du produit moulé par rapport à la matrice correspondante (2).

5. Procédé selon l'une quelconque des revendications précédentes, dans lequel, pendant le retrait de ladite broche d'éjection (17), le mouvement de celle-ci est affaibli par l'action contrariante d'une force de résistance.

6. Machine de moulage par injection comprenant :
- une matrice fixe (1) ;
- une matrice déplaçable (2), opposée à ladite matrice fixe (1) de manière à définir une cavité de moule (23) entre elles, et déplaçable pour venir en, ou pour sortir de contact avec ladite matrice fixe ;
- au moins une broche d'éjection (17) supportée pour un coulissement à l'intérieur d'une (2) desdites matrices (1, 2), une extrémité formant pointe de ladite broche d'éjection se trouvant en face de cette cavité de moulage (23) ;
- un dispositif d'entraînement (54 ; 30 à 51) pour entraîner ladite broche d'éjection (17) ; et
- une unité de commande (55) pour commander ledit dispositif d'entraînement (54 ; 30 à 51) ;
**caractérisée en ce que** ladite unité de commande (55) est adaptée pour exécuter une commande conformément au procédé selon l'une quelconque des revendications précédentes.

7. Machine de moulage par injection selon la revendication 6, dans laquelle ladite vibration est produite par ledit dispositif d'entraînement (54 ; 30 à 51).

8. Machine de moulage par injection selon la revendication 6 ou 7, dans laquelle le retrait de ladite broche d'éjection (17) est exécuté par une force élastique.

9. Machine de moulage par injection selon la revendication 8, apte à exécuter le procédé selon la revendication 5, dans laquelle ledit dispositif d'entraînement (54 ; 30 à 51) est commandé hydrauliquement et ladite force de résistance est obtenue par au moins un obstacle (41, 42, 50) situé sur le trajet du fluide hydraulique respectif.
